(19) Europäisches Patentamt
European Patent Office
Office européen des brevets

(11) **EP 2 395 587 A1**

(12) **EUROPEAN PATENT APPLICATION**
published in accordance with Art. 153(4) EPC

(43) Date of publication:
**14.12.2011 Bulletin 2011/50**

(51) Int Cl.:
**H01M 10/04** *(2006.01)* **H01M 2/02** *(2006.01)*
**H01M 2/10** *(2006.01)* **H01M 4/66** *(2006.01)*

(21) Application number: **09839591.6**

(22) Date of filing: **16.07.2009**

(86) International application number:
**PCT/JP2009/003367**

(87) International publication number:
**WO 2010/089813 (12.08.2010 Gazette 2010/32)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.02.2009 JP 2009024994**

(71) Applicant: **Panasonic Corporation**
**Kadoma-shi**
**Osaka 571-8501 (JP)**

(72) Inventors:
• **WATANABE, Kozo**
**Chuo-ku,**
**Osaka-shi,**
**Osaka 540-6207 (JP)**

• **MURAOKA, Yoshiyuki**
**Chuo-ku,**
**Osaka-shi,**
**Osaka 540-6207 (JP)**
• **SATO, Toshitada**
**Chuo-ku,**
**Osaka-shi,**
**Osaka 540-6207 (JP)**
• **MATSUMOTO, Mami**
**Chuo-ku,**
**Osaka-shi,**
**Osaka 540-6207 (JP)**

(74) Representative: **Grünecker, Kinkeldey,**
**Stockmair & Schwanhäusser**
**Leopoldstrasse 4**
**80802 München (DE)**

(54) **SECONDARY BATTERY, BATTERY PACK HAVING THE SECONDARY BATTERY, AND METHOD FOR MANUFACTURING THE SECONDARY BATTERY**

(57)     The disclosed secondary battery is a flat secondary battery 10 including an electrode group 1 which is sealed in a laminate case 9 made of laminate films, and includes a positive electrode including a positive electrode current collector carrying thereon a positive electrode material mixture layer containing a positive electrode active material and a binder, a negative electrode, and a porous insulating layer. The laminate case 9 includes a container portion 9a for containing the electrode group 1, a weld portion 9b in which the laminate films are welded to each other, and a non-weld portion 9c which is provided between the container portion 9a and the weld portion 9b, and in which the laminate films are not welded to each other. The positive electrode has a tensile extension of 3.0% or higher.

FIG. 2

**Description**

TECHNICAL FIELD

The present invention relates to a secondary battery, a battery pack including the secondary battery, and a method for fabricating the secondary battery.

BACKGROUND ART

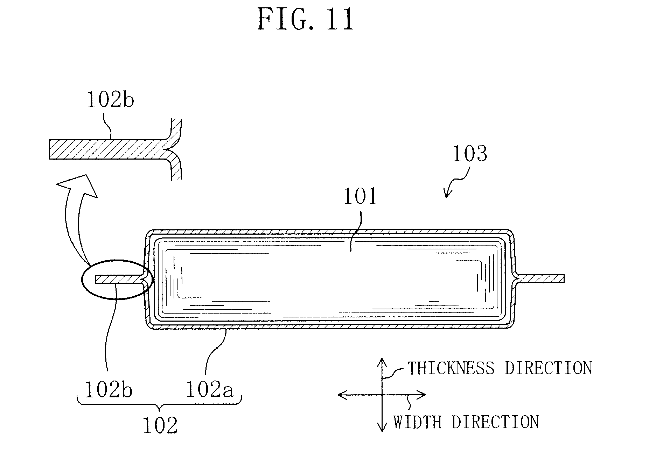

Referring to FIG. 11, a structure of a conventional secondary battery will be described. FIG. 11 is a cross-sectional view illustrating the structure of the conventional secondary battery.

As shown in FIG. 11, an electrode group 101 is sealed in a laminate case 102 made of laminated films to constitute a secondary battery 103. The laminate case 102 is sealed by a weld portion 102b where the laminate films are welded to each other. Thus, the laminate case 102 includes a weld portion 102b, and a container portion 102a which is adjacent to the weld portion 102b, and contains the electrode group 101.

CITATION LIST

PATENT DOCUMENT

Patent Document 1: Japanese Patent Publication No. 2004-234899

SUMMARY OF THE INVENTION

TECHNICAL PROBLEM

When positive and negative electrodes expand due to charges and discharges, an electrode group expands, and buckling occurs in the electrode group (particularly in a region of the electrode group sandwiched between side surfaces of the laminate case facing each other in a thickness direction).

The inventors of the present invention have closely studied on causes of the buckling in the electrode group, and have produced the following finding. When the positive and negative electrodes expand due to charges and discharges, and stress is caused in the electrode group in the thickness direction, the negative electrode is deformed. However, the positive electrode cannot be deformed in accordance with the deformation of the negative electrode, and the positive electrode is broken (i.e., the positive electrode buckles).

In view of the foregoing, an object of the present invention is to prevent the occurrence of the buckling in the electrode group by deforming the positive electrode in accordance with the deformation of the negative electrode even when the positive and negative electrodes expand due to charges and discharges.

SOLUTION TO THE PROBLEM

To achieve the above-described object, a first aspect of the present invention is directed to a flat secondary battery including: an electrode group which is sealed in a laminate case made of laminate films, and includes a positive electrode including a positive electrode current collector carrying thereon a positive electrode material mixture layer containing a positive electrode active material and a binder, a negative electrode, and a porous insulating layer, wherein the laminate case includes a container portion for containing the electrode group, a weld portion in which the laminate films are welded to each other, and a non-weld portion which is provided between the container portion and the weld portion, and in which the laminate films are not welded to each other, and the positive electrode has a tensile extension of 3.0% or higher.

In the secondary battery according to the first aspect of the invention, the non-weld portion is provided between the container portion and the weld portion of the laminate case. This can provide space which allows the electrode group to expand in a width direction in the laminate case. Therefore, even when the positive and negative electrodes expand due to charges and discharges, the electrode group can expand not in a thickness direction, but preferentially in the width direction. This can reduce stress caused in the thickness direction in the electrode group.

Additionally, the tensile extension of the positive electrode is increased to 3.0% or higher. Therefore, even when the stress is caused in the electrode group, the positive electrode can be deformed in accordance with the deformation of the negative electrode.

Thus, the invention allows reduction of the stress caused in the electrode group in the thickness direction, and allows deformation of the positive electrode in accordance with the deformation of the negative electrode. Therefore, the occurrence of the buckling in the electrode group can be prevented.

In the secondary battery according to the first aspect of the invention, the negative electrode preferably has a tensile extension of 3.0% or higher, and the porous insulating layer preferably has a tensile extension of 3.0% or higher.

In the secondary battery according to the first aspect of the invention, the positive electrode is preferably prepared by rolling the positive electrode current collector to which positive electrode material mixture slurry containing the positive electrode active material has been applied and dried, and thermally treating the positive electrode current collector carrying the dried positive electrode material mixture slurry thereon at a predetermined temperature.

In the secondary battery according to the first aspect of the invention, the positive electrode current collector preferably primarily contains aluminum, and contains iron.

This configuration can alleviate coating the positive electrode active material with the binder which is molten due to the thermal treatment performed after rolling.

In the secondary battery according to the first aspect of the invention, the content of iron in the positive electrode current collector is preferably 1.20% by weight to 1.70% by weight, both inclusive.

To achieve the above-described object, a battery pack according to the first aspect of the invention includes: the secondary battery according to the first aspect of the invention, and a pack case containing the secondary battery, wherein the pack case includes a pressing portion which is provided between a surface of the laminate case facing a thickness direction and the pack case, and presses a center portion of the laminate case in the thickness direction, and space is provided between a surface of the pack case facing a width direction and the laminate case.

In the battery pack according to the first aspect of the invention, as described above, stress caused in the electrode group in the thickness direction can be reduced even when the positive and negative electrodes expand due to charges and discharges, and the positive electrode can be deformed in accordance with the deformation of the negative electrode even when the stress is caused in the electrode group. This can prevent the occurrence of the buckling in the electrode group.

In addition, even when the positive and negative electrodes expand due to charges and discharges, the pressing portion can press the center portion of the laminate case in the thickness direction. This allows the electrode group to preferentially expand in the width direction, thereby further reducing the stress caused in the electrode group in the thickness direction. Therefore, the occurrence of the buckling in the electrode group can further be prevented.

To achieve the above-described object, a method for fabricating a secondary battery according to the first aspect of the invention is a method for fabricating a flat secondary battery including an electrode group which is sealed in a laminate case made of laminate films, and includes a positive electrode including a positive electrode current collector carrying thereon a positive electrode active material layer containing a positive electrode active material and a binder, a negative electrode, and a porous insulating layer, the method including: (a) preparing the positive electrode; (b) preparing the negative electrode; (c) forming the electrode group by winding or stacking the positive electrode and the negative electrode with the porous insulating layer interposed between after the preparation of the positive electrode (a) and the preparation of the negative electrode (b); and (d) sealing the electrode group in the laminate group after the formation of the electrode group (c), wherein the preparation of the positive electrode (a) includes: (a1) applying positive electrode material mixture slurry containing the positive electrode active material onto the positive electrode current collector, and drying the positive electrode material mixture slurry; (a2) rolling the positive electrode current collector carrying the dried positive electrode material mixture slurry thereon; and (a3) increasing a tensile extension of the positive electrode to 3.0% or higher by thermally treating the positive electrode current collector carrying the dried positive electrode material mixture slurry thereon at a predetermined temperature after the rolling of the positive electrode current collector (a2), and the sealing of the electrode group (d) includes: (d1) stacking the laminate films in such a manner that the electrode group is contained in a container portion; (d2) heating and welding peripheral portions of the stacked laminate films to form a weld portion, and forming a non-weld portion between the container portion and the weld portion.

In the method for fabricating the secondary battery according to the first aspect of the invention, the non-weld portion in which the laminate films are not welded to each other can be provided between the container portion and the weld portion. Additionally, the tensile extension of the positive electrode can be increased to 3.0% or higher by thermal treatment performed after the rolling.

In the method for fabricating the secondary battery according to the first aspect of the invention, the predetermined temperature is preferably higher than a softening temperature of the positive electrode current collector.

In the method for fabricating the secondary battery according to the first aspect of the invention, the positive electrode current collector preferably primarily contains aluminum, and contains iron.

This can reduce the temperature and/or time for the thermal treatment required to increase the tensile extension of the positive electrode to 3.0% or higher, and can alleviate coating the positive electrode active material with the binder which is molten by the thermal treatment performed after the rolling.

ADVANTAGES OF THE INVENTION

According to the secondary battery and the method for fabricating the secondary battery of the present invention, the non-weld portion is provided between the container portion and the weld portion of the laminate case. This can provide space which allows the electrode group to expand in the width direction in the laminate case. Therefore, even when the positive and negative electrodes expand due to charges and discharges, the electrode group can expand not in the thickness direction, but preferentially in the width direction. This can reduce stress caused in the thickness direction in the electrode group. Additionally, the tensile extension of the positive electrode is increased to 3.0% or higher. Therefore, even when the stress is caused in the electrode group, the positive electrode can be deformed in accordance with the deformation of the negative electrode. This allows reduction of the stress caused in the electrode group in the thickness direction, and allows deformation of the positive electrode in accordance with the deformation of the negative electrode. Therefore, the occurrence of the buckling in the electrode group can be prevented.

According to the battery pack of the present invention, the pressing portion can press the center portion of the laminate case in the thickness direction even when the positive and negative electrodes expand due to charges and discharges. This allows expansion of the electrode group preferentially in the width direction, thereby further reducing the stress caused in the electrode group in the thickness direction. Therefore, the occurrence of the buckling in the electrode group can further be prevented.

BRIEF DESCRIPTION OF THE DRAWINGS

[FIG. 1] FIG. 1 is a perspective view illustrating the structure of a secondary battery according to a first embodiment of the invention.

[FIG. 2] FIG. 2 is a cross-sectional view illustrating the structure of the secondary battery according to the first embodiment of the invention.

[FIG. 3] FIG. 3 is an enlarged cross-sectional view illustrating the structure of an electrode group.

[FIG. 4] FIG. 4 is a perspective view illustrating a method for fabricating the secondary battery according to the first embodiment of the invention.

[FIG. 5] FIG. 5 is a cross-sectional view illustrating the method for fabricating the secondary battery according to the first embodiment of the invention.

[FIG. 6] FIGS. 6(a) and 6(b) are enlarged cross-sectional views illustrating the structure of a laminate film.

[FIG. 7] FIG. 7 is a cross-sectional view illustrating the laminate case which is deformed by an electrode group which preferentially expanded in a width direction.

[FIG. 8] FIG. 8 is a cross-sectional view illustrating the structure of a battery pack according to a second embodiment of the invention.

[FIG. 9] FIG. 9 is a cross-sectional view illustrating a method for fabricating the battery pack according to the second embodiment of the invention.

[FIG. 10] FIG. 10 is a cross-sectional view illustrating the structure of a battery pack according to another example of the second embodiment of the invention.

[FIG. 11] FIG. 11 is a cross-sectional view illustrating the structure of a conventional secondary battery.

DESCRIPTION OF EMBODIMENTS

As described above, the inventors' close study on the causes of the buckling in the electrode group has produced the following finding. When the positive and negative electrodes expand due to charges and discharges, and stress is caused in the electrode group in the thickness direction, the negative electrode is deformed. However, the positive electrode cannot be deformed in accordance with the deformation of the negative electrode, and the positive electrode is broken (i.e., the positive electrode buckles).

In order to prevent the occurrence of the bucking in the electrode group, the stress caused in the electrode group in the thickness direction has to be reduced (a). Specifically, what is important is to expand the electrode group preferentially in the direction except for the thickness direction (e.g., a width direction).

The inventors of the present invention have closely studied on how to preferentially expand the electrode group in the width direction, and have produced the following finding. Specifically, provision of a non-weld portion between a weld portion of the laminate case in which the electrode group is sealed, and the container portion of the laminate case containing the electrode group allows the electrode group to preferentially expand in the width direction even when the positive and negative electrodes expand due to charges and discharges. This can reduce the stress caused in the electrode group in the thickness direction.

Further, in order to prevent the occurrence of the buckling in the electrode group, the positive electrode has to be deformed in accordance with the deformation of the negative electrode (b). Specifically, what is important is to easily deform the positive electrode to which the stress is applied. The inventors of the present invention have found that increasing the tensile extension of the positive electrode to a predetermined rate (specifically, e.g., 3.0%) or higher allows deformation of the positive electrode in accordance with the deformation of the negative electrode even when the stress is caused in the electrode group, and is applied to the positive electrode. The "tensile extension of the positive electrode" indicates the rate of stretch of the positive electrode measured immediately before the positive electrode is torn when the positive electrode is stretched relative to the positive electrode before being stretched (i.e., the rate of deformation of the positive electrode due to tensile stress applied thereto).

As described above, regarding the secondary battery sealed in the laminate case, the present invention is directed to (A) provision of the non-weld portion in which the laminate films are not welded to each other between the weld portion and the container portion of the laminate case, and (B) increasing the tensile extension of the positive electrode to 3.0% or higher. This allows prevention of the occurrence of the buckling in the electrode group.

In order to prevent formation of a gap formed by gas which is generated in the secondary battery due to repeated charges and discharges, and enters between the positive and negative electrodes, a secondary battery has been proposed in which a non-weld portion is provided between a portion of the laminate case covering the electrode group and a welded portion of the laminate case (see, e.g., Patent Document 1). According to the technology described in Patent Document 1, the gas, if generated in the secondary battery due to the repeated charges and discharges, flows into the non-weld portion of the laminate case, thereby preventing the entry of the gas between the positive and negative electrodes.

Applicant of the present application has studied on causes of a short circuit which occurs in the secondary battery when the battery is crushed under pressure, and has produced the following finding. Among the positive electrode, the negative electrode, and the separator constituting the electrode group, the positive electrode which stretches the least is torn first. As a result, the torn positive electrode breaks the separator to cause a short circuit between the positive and negative electrodes, thereby causing a short circuit in the electrode group.

Then, the applicant of the present application has studied on how to increase the tensile extension of the positive electrode, and has produced the following finding. After the positive electrode current collector to which the positive electrode material mixture slurry is applied and dried is rolled, the positive electrode current collector carrying the dried positive electrode material mixture slurry thereon is thermally treated at a temperature higher than a softening temperature of the positive electrode current collector. This can increase the tensile extension of the positive electrode.

Based on the finding, the applicant of the present application has disclosed a technology of preventing the short circuit from occurring in the battery crushed under pressure by increasing the tensile extension of the positive electrode to a predetermined rate or higher in the specification of Japanese Patent Application No. 2007-323217 (PCT/JP2008/002114). According to the technology disclosed by Japanese Patent Application No. 2007-323217, the tensile extension of the positive electrode is increased to 3.0% or higher. With this configuration, the positive electrode would not be preferentially broken even when the battery is crushed under pressure, thereby preventing the occurrence of the short circuit in the battery.

A mechanism of stretch of a positive electrode which is not thermally treated after the rolling, and a positive electrode which is thermally treated after the rolling will be examined below.

When the positive electrode which is not thermally treated after the rolling is stretched, a large crack is generated in the positive electrode material mixture layer, and simultaneously, the positive electrode is broken. A presumable cause of this phenomenon is as follows. As the positive electrode stretches, tensile stress caused in the positive electrode material mixture layer increases, thereby increasing the tensile stress applied to the positive electrode current collector. When a large crack is generated in the positive electrode material mixture layer, the tensile stress applied to the positive electrode current collector is concentrated on part of the positive electrode current collector near the large crack. As a result, the positive electrode current collector is broken simultaneously with the generation of the crack, thereby breaking the positive electrode.

On the other hand, when the positive electrode which is thermally treated after the rolling is stretched, the positive electrode keeps stretching while generating multiple micro-cracks in the positive electrode material mixture layer, and then the positive electrode is broken. A presumable cause of this phenomenon is as follows. Tensile stress applied to the positive electrode current collector is dispersed to parts thereof near the multiple micro-cracks generated in the positive electrode material mixture layer. Thus, the generation of the cracks does not significantly affect the positive electrode current collector, and the positive electrode current collector would not be broken simultaneously with the generation of the cracks. Therefore, the positive electrode keeps stretching after the cracks are generated. When the dispersed tensile stress exceeds a certain level X, the positive electrode current collector is broken, thereby breaking the positive electrode. The "certain level X" is a level of the tensile stress at which the positive electrode current collector on each surface of which the multiple micro-cracks are generated in the positive electrode material mixture layer is broken. For example, the "certain level X" may be a level around which the positive electrode current collector is broken when only the positive electrode current collector is stretched.

Thus, the positive electrode which is not thermally treated after the rolling, and the positive electrode which is thermally treated after the rolling stretch in different mechanisms. Therefore, the positive electrode which is thermally treated after the rolling has a higher tensile extension than the positive electrode which is not thermally treated after the rolling.

As understood from the foregoing, the positive electrode includes the positive electrode current collector carrying the positive electrode material mixture layer on each surface thereof. Therefore, the tensile extension of the positive electrode is not limited only by the tensile extension of the positive electrode current collector.

Applicant of the present application has found that the thermal treatment for increasing the tensile extension of the positive electrode has to be performed after the rolling. The tensile extension of the positive electrode can be increased by performing the thermal treatment before the rolling. However, the rolling performed after the thermal treatment reduces the tensile extension of the positive electrode. Thus, the tensile extension of the positive electrode cannot be increased after all.

Further, the applicant's study on the thermal treatment performed after the rolling has produced the following finding. When the thermal treatment is performed at a high temperature, and/or for a long time, the tensile extension of the positive electrode can be increased to the predetermined rate or higher. However, the high-temperature and/or longtime thermal treatment melts the binder, and the positive electrode active material is coated with the molten binder, thereby reducing the battery capacity.

Then, the applicant of the present application has closely studied on how to reduce the temperature and/or time for the thermal treatment, and has produced the following finding. The temperature and/or time for the thermal treatment required to increase the tensile extension of the positive electrode to the predetermined rate or higher can be reduced by using a positive electrode current collector which primarily contains aluminum, and contains iron.

Based on the finding, the applicant of the present application has disclosed in Japanese Patent Application No. 2007-323217 a technology of increasing the tensile extension of the positive electrode to the predetermined rate or higher by using a positive electrode current collector which primarily contains aluminum, and contains iron, while alleviating coating of the positive electrode active material with the binder which is molten by the thermal treatment.

Embodiments of the invention will be described in detail with reference to the drawings.

(First Embodiment)

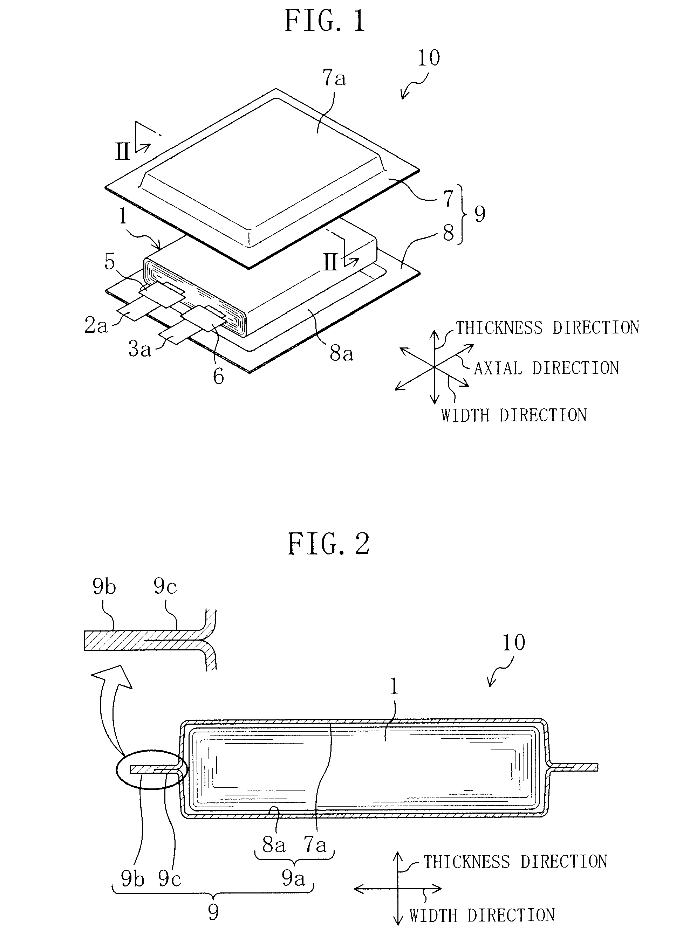

A secondary battery according to a first embodiment of the invention will be described with reference to FIGS. 1-3. FIG. 1 is a perspective view illustrating the structure of the secondary battery according to the first embodiment of the invention. FIG. 2 is a cross-sectional view taken along the line II-II shown in FIG. 1 illustrating the structure of the secondary battery according to the first embodiment of the invention.

In the present specification, an "axial direction" is a direction of an axis about which the positive and negative electrodes are wound with the porous insulating layer interposed therebetween. A "thickness direction" is a direction in which a shorter side of a flat secondary battery extends. A "width direction" is a direction in which a longer side of the flat secondary battery extends.

As shown in FIG. 1, an electrode group 1 is sealed in a laminate case 9 made of laminate films 7 and 8 to constitute a secondary battery 10. The el ectrode group 1 is contained in a container portion (see reference character 9a in FIG. 2) including a raised portion 7a of the laminate film 7, and a recessed portion 8a of the laminate film 8 as shown in FIG. 1. As shown in FIG. 2, the laminate case 9 is sealed at a weld portion 9b in which a peripheral portion of the laminate film (see reference character 7 in FIG. 1) and a peripheral portion of the laminate film (see reference number 8 in FIG. 1) are welded to each other.

As shown in FIG. 2, the laminate case 9 includes a non-weld portion 9c in which the laminate films are not welded to each other, and which is provided between the container portion 9a containing the electrode group 1 and the weld portion 9b in which the laminate films are welded to each other.

The electrode group 1 includes positive and negative electrodes wound with a separator (a porous insulating layer) interposed therebetween. As shown in FIG. 1, a positive electrode lead 2a is attached to the positive electrode, and a negative electrode lead 3a is attached to the negative electrode. Tab films 5 and 6 are attached to the positive and negative electrode leads 2a and 3a, respectively. The tab films 5 and 6 are interposed between the peripheral portion of the laminate film 7 and the peripheral portion of the laminate film 8, and are welded to the laminate films 7 and 8.

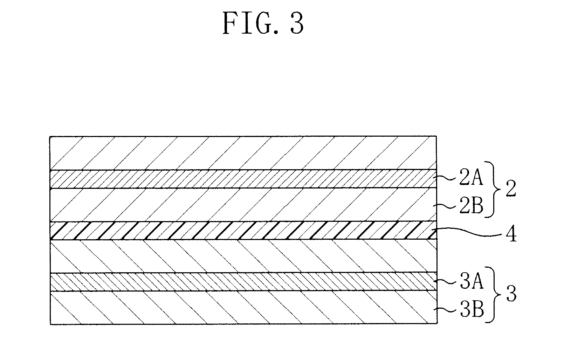

The electrode group 1 schematically illustrated in FIG. 1 includes, as shown in FIG. 3, a positive electrode 2 including a positive electrode current collector 2A on each surface of which a positive electrode material mixture layer 2B is formed, a negative electrode 3 including a negative electrode current collector 3A on each surface of which a negative electrode material mixture layer 3B is formed, and a separator 4 interposed between the positive electrode 2 and the negative electrode 3. FIG. 3 is an enlarged cross-sectional view illustrating the structure of the electrode group shown in FIG. 1.

The positive electrode 2 is thermally treated after rolling. The positive electrode 2 has a tensile extension of 3.0% or higher.

The positive electrode current collector 2A primarily contains aluminum, and contains iron. The content of iron in the positive electrode current collector 2A is preferably 1.20% by weight to 1.70% by weight, both inclusive. The positive electrode current collector which "primarily contains aluminum, and contains iron" indicates a positive electrode current collector containing aluminum as a main ingredient, and iron as a subingredient, i.e., containing more aluminum than iron.

The negative electrode 3 has a tensile extension of 3.0% or higher, and the separator 4 has a tensile extension of 3.0% or higher.

<Tensile extension>

The tensile extension is measured in the following manner, for example. A test positive electrode of 15 mm in width, and 20 mm in length was prepared, and one end thereof is fixed. Then, the other end of the test positive electrode is stretched at a speed of 20 mm/min in the longitudinal direction to measure the length of the test positive electrode immediately before the test positive electrode is torn. The tensile extension is obtained from the length of the test positive electrode before stretching (i.e., 20 mm) and the length of the test positive electrode immediately before tearing.

The positive electrode material mixture layer 2B constituting the positive electrode 2 contains a positive electrode active material, a binder, a conductive agent, etc. The positive electrode active material, the binder, and the conductive agent may be known materials. The negative electrode current collector 3A constituting the negative electrode 3 may be made of a known material. The negative electrode material mixture layer 3B constituting the negative electrode 3 contains a negative electrode active material, a binder, a conductive agent, etc. The negative electrode active material, the binder, and the conductive agent may be known materials. The separator 4 may be made of a known material.

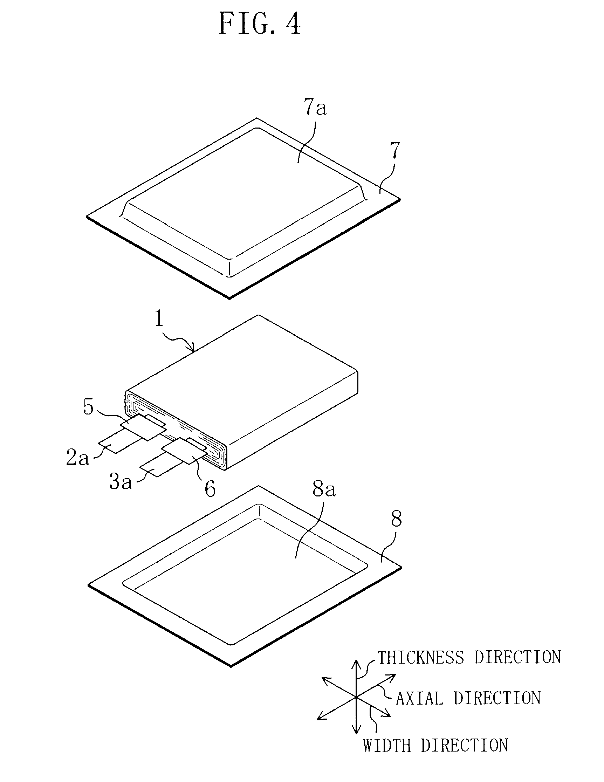

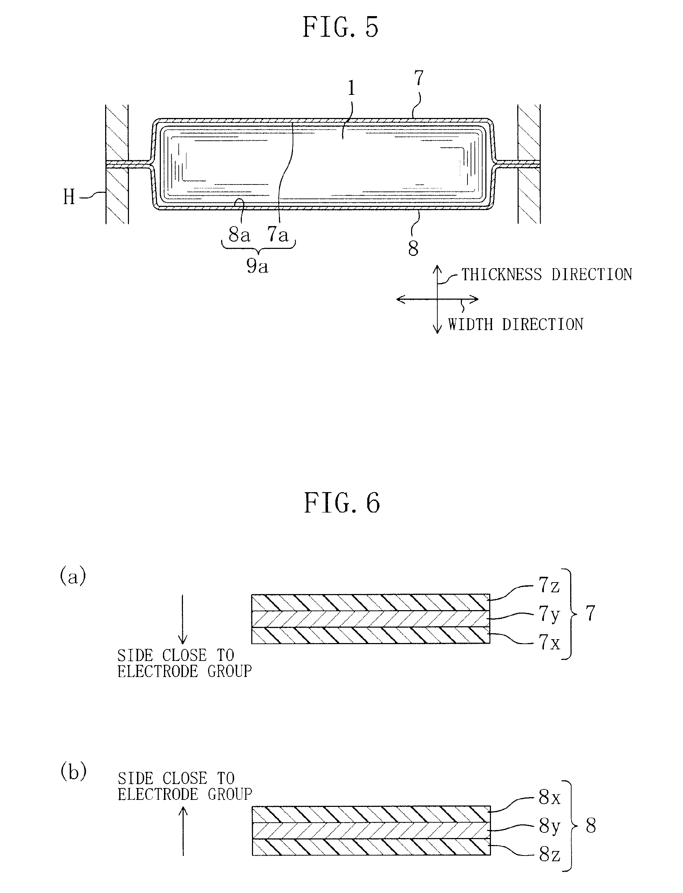

A method for fabricating the secondary battery according to the first embodiment of the invention will be described with reference to FIGS. 4 and 5. FIGS. 4 and 5 show the method for fabricating the secondary battery according to the first embodiment of the invention.

-Fabrication of Positive Electrode-

First, positive electrode material mixture slurry containing the positive electrode active material, the binder, the conductive agent, etc. is prepared. Then, the positive electrode material mixture slurry is applied to the positive electrode current collector, and is dried. Then, the positive electrode current collector carrying the dried positive electrode material mixture slurry is rolled to obtain a positive electrode plate of a predetermined thickness. The positive electrode plate (i.e., the positive electrode current collector which carries the dried positive electrode material mixture slurry, and is rolled) is thermally treated at a predetermined temperature. Then, the positive electrode plate is cut to have predetermined width and length. Thus, a positive electrode of predetermined thickness, width, and length is fabricated.

The predetermined temperature is higher than a softening temperature of the positive electrode current collector. The predetermined temperature is preferably lower than a decomposition temperature of the binder.

-Fabrication of Negative Electrode-

First, negative electrode material mixture slurry containing the negative electrode active material, the binder, etc. is prepared. Then, the negative electrode material mixture slurry is applied to the negative electrode current collector, and is dried. Then, the negative electrode current collector carrying the dried negative electrode material mixture slurry is rolled to obtain a negative electrode plate of a predetermined thickness. The negative electrode plate is then cut to have predetermined width and length. Thus, a negative electrode of predetermined thickness, width, and length is fabricated.

-Fabrication of Secondary Battery-

As shown in FIG. 4, positive and negative electrode leads 2a and 3a to which tab films 5 and 6 made of polypropylene (PP), for example, are attached, respectively, are prepared. Then, the positive electrode lead 2a is attached to the positive electrode current collector (see reference character 2A in FIG. 3), and the negative electrode lead 3a is attached to the negative electrode current collector (see reference character 3A in FIG. 3). Then, the positive electrode (see reference character 2 in FIG. 3) and the negative electrode (see reference character 3 in FIG. 3) are wound with a separator (see reference character 4 in FIG. 3) interposed therebetween to constitute the electrode group 1.

As shown in FIG. 4, a raised portion 7a is thermally formed in the laminate film 7, and a recessed portion 8a is thermally formed in the laminate film 8, for example.

Then, as shown in FIG. 5, the laminate film 7 is overlaid on the laminate film 8 in such a manner that the electrode group 1 is contained in a container portion 9a comprised of the raised portion 7a and the recessed portion 8a. In this case, although not shown, the tab films (see reference characters 5 and 6 in FIG. 4) attached to the positive and negative electrode leads, respectively, are interposed between the peripheral portion of the laminate film 7 and the peripheral portion of the laminate film 8.

In FIG. 4, the laminate film 7 is simply illustrated. Specifically, the laminate film 7 includes, as shown in FIG. 6 (a), a thin metal film 7y, a thin resin film 7x adhered to a lower surface of the thin metal film 7y (a surface facing the electrode group) with an adhesive, and a thin resin film 7z adhered to an upper surface of the thin metal film 7y with an adhesive. The thin metal film 7y may be, for example, 40 μm thick Al foil. The thin resin film 7x may be, for example, a 30 μm thick PP film. The thin resin film 7z may be, for example, a 25 μm thick nylon film. The laminate film 7 including the thin resin film 7x, the thin metal film 7y, the thin resin film 7z, the adhesive bonding the thin resin film 7x and the thin metal film 7y (not shown), and the adhesive bonding the thin metal film 7y and the thin resin film 7z (not shown) has a total thickness of 120 μm, for example. FIG. 6(a) is an enlarged cross-sectional view illustrating the structure of the laminate film 7 shown in FIG. 4.

The laminate film 8 has the same structure as the laminate film 7. The laminate film 8 includes, as shown in FIG. 6(b), a thin metal film 8y, a thin resin film 8x adhered to an upper surface of the thin metal film 8y (a surface facing the electrode group) with an adhesive, and a thin resin film 8z adhered to a lower surface of the thin metal film 8y with an adhesive. Like the thin metal film 7y, the thin metal film 8y may be, for example, 40 μm thick Al foil. Like the thin resin film 7x, the thin resin film 8x may be, for example, a 30 μm thick PP film. Like the thin resin film 7z, the thin resin film 8z may be, for example, a 25 μm thick nylon film. A total thickness of the laminate film 8 is 120 μm, for example. FIG. 6(b) is an enlarged cross-sectional view illustrating the structure of the laminate film 8 shown in FIG. 4.

Then, as shown in FIG. 5, with part of the laminate film 7 and part of the laminate film 8 overlapping with each other, a peripheral portion of the overlapping part is heated at 190°C for 5 seconds by an electric heater H, for example, thereby forming a weld portion (see reference character 9b in FIG. 2) in which the laminate films 7 and 8 are welded to each other. Simultaneously, a non-weld portion (see reference character 9c in FIG. 2) in which the laminate films 7 and 8 are not welded to each other is formed between the container portion (see reference character 9a in FIG. 2) and the weld portion. Although not shown, the tab films (see reference characters 5 and 6 in FIG. 4) interposed between the peripheral portion of the laminate film 7 and the peripheral portion of the laminate film 8 are welded to the laminate films 7 and 8.

A portion of the overlapping part of the laminate film 7 and the laminate film 8 (i.e., a peripheral portion where the weld portion is formed) has length L in the width direction calculated in the following manner.

$$\text{Length L} = \text{tensile extension of the positive electrode} \times \text{width of the electrode group}$$

Thus, a secondary battery (see reference character 10 in FIG. 2) including the electrode group 1 sealed in the laminate case 9 made of the laminate films 7 and 8 is fabricated.

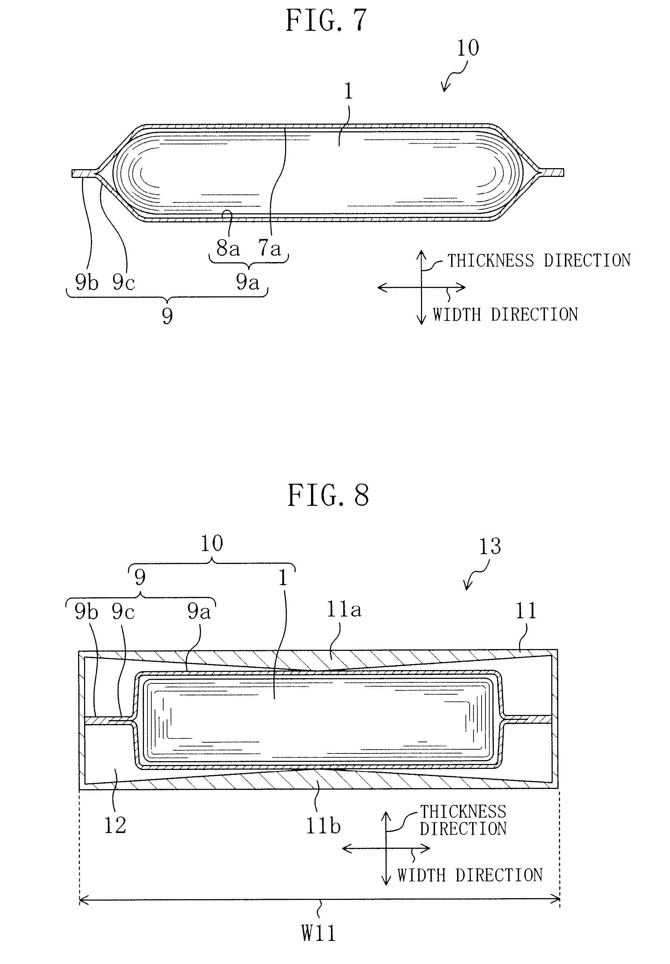

In this embodiment, the non-weld portion 9c is provided between the container portion 9a and the weld portion 9b of the laminate case 9. This can provide space in the laminate case 9 which allows the electrode group 1 to expand in the width direction. Therefore, even when the positive and negative electrodes expand due to charges and discharges, the electrode group 1 can expand not in the thickness direction, but preferentially in the width direction as shown in FIG 7. This can reduce stress caused in the electrode group in the thickness direction.

Further, a tensile extension of the positive electrode is increased to 3.0% or higher. This allows deformation of the positive electrode in accordance with the deformation of the negative electrode even when the stress is caused in the electrode group.

Thus, the stress caused in the electrode group in the thickness direction can be reduced, and the positive electrode is deformed in accordance with the deformation of the negative electrode. This can prevent the occurrence of buckling in the electrode group. FIG. 7 is a cross-sectional view illustrating the laminate case deformed by the electrode group which preferentially expanded in the width direction.

With use of a positive electrode having the tensile extension increased to 3.0% or higher, the positive electrode would not preferentially be broken even when the secondary battery is crushed under pressure. This can prevent a short circuit in the battery.

Like the positive electrode, the negative electrode and the separator preferably have the tensile extension of 3.0% or higher. Reasons therefor are as follows. First, when the positive electrode and the separator have the tensile extension of 3.0% or higher, and the negative electrode has the tensile extension less than 3.0%, the negative electrode would preferentially be broken when the battery is crushed under pressure, thereby causing the short circuit in the battery. Second, when the positive and negative electrodes have the tensile extension of 3.0% or higher, and the separator has the tensile extension less than 3.0%, the separator would preferentially be broken when the battery is crushed under pressure, thereby causing the short circuit in the battery.

With use of a positive electrode current collector which primarily contains aluminum, and contains iron, a temperature of the thermal treatment required to increase the tensile extension of the positive electrode to 3.0% or higher can be reduced, and/or time for the thermal treatment required to increase the tensile extension of the positive electrode to 3.0% or higher can be reduced. This can alleviate coating the positive electrode active material with the binder which is molten by the thermal treatment performed after the rolling.

In this embodiment, as an example of the positive electrode current collector, the positive electrode current collector which primarily contains aluminum, and contains iron is used for the purpose of alleviating coating the positive electrode active material with the binder which is molten by the thermal treatment. However, the invention is not limited to this example. For example, the positive electrode current collector may be made of aluminum of high purity containing no iron.

In this embodiment, as an example of the electrode group, the electrode group including the positive and negative electrodes wound with the separator interposed therebetween is used. However, the invention is not limited to this example. For example, the electrode group may include the positive and negative electrodes stacked with the separator interposed therebetween.

As described above, the present invention advantageously achieves the object of the invention, and advantageously prevents the short circuit from occurring in the battery when the battery is crushed under pressure. Additionally, the present invention is also advantageous in that the short circuit can be prevented from occurring in the battery in which foreign particles have entered, or in that the positive electrode can be prevented from tearing when the positive and negative electrodes are wound (or stacked) with the separator interposed therebetween.

(Second Embodiment)

A battery pack according to a second embodiment of the invention will be described with reference to FIG. 8. FIG. 8 is a cross-sectional view illustrating the structure of the battery pack according to the second embodiment of the invention. The battery pack of this embodiment includes a pack case containing the secondary battery of the first embodiment.

As shown in FIG. 8, a secondary battery 10 including an electrode group 1 sealed in a laminate case 9 is contained in a pack case 11 to constitute a battery pack 13. The pack case 11 includes pressing portions 11a and 11b, each of which is provided between a surface of the laminate case 9 facing the thickness direction and the pack case 11, and presses a center portion of the laminate case 9 in the thickness direction. Space 12 is provided between a surface of the pack case 11 facing the width direction and the laminate case 9.

A reason why the space 12 is provided is as follows. When the electrode group 1 expands preferentially in the width direction as shown in FIG. 7, the non-weld portion 9c is pressed toward the space 12, and the laminate films constituting the non-weld portion 9c are separated. Thus, the laminate case 9 can be deformed.

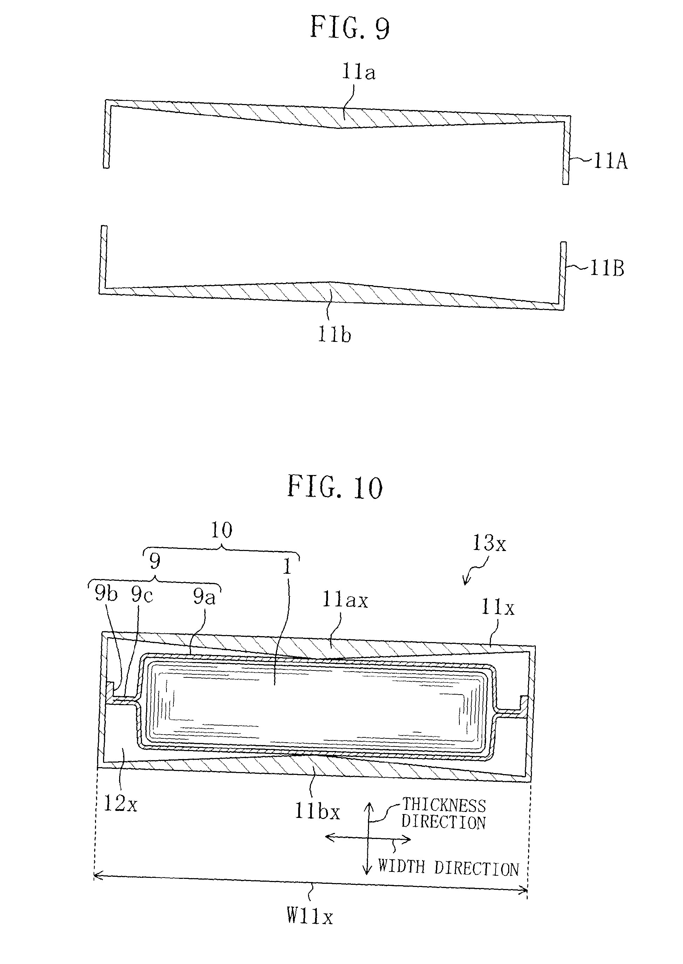

A method for fabricating the battery pack of the second embodiment of the invention will be described with reference to FIG. 9. FIG. 9 is a cross-sectional view illustrating the method for fabricating the battery pack of the second embodiment of the invention.

First, the secondary battery 10 is fabricated in the same manner described in the first embodiment.

Then, as shown in FIG. 9, case parts 11A and 11B which include the pressing portions 11a and 11b integrally formed by resin forming or metal forming, for example, are formed.

The case parts 11A and 11B are bonded in such a manner that the secondary battery 10 is contained in a container portion formed between the case parts 11A and 11B. In this case, the s econdary battery 10 is sandwiched between the pressing portion 11a and the pressing portion 11b.

Thus, the battery pack 13 including the secondary battery 10 contained in the pack case 11 including the case parts 11A and 11B is fabricated.

The present embodiment can offer the advantages similar to those of the first embodiment.

Further, even when the positive and negative electrodes expand due to charges and discharges, the pressing portions 11a and 11b can press the center portion of the laminate case 9 in the thickness direction. Thus, as compared with the first embodiment, the electrode group 1 can expand more preferentially in the width direction. This can further reduce the stress caused in the electrode group in the thickness direction, and can further prevent the occurrence of the buckling in the electrode group.

In the present embodiment, an example has been described in which the case parts 11A and 11B including the integrated the pressing portions 11a and 11b, respectively. However, the invention is not limited to this example. For example, the pressing portions may be formed after the case parts are formed.

In the present embodiment, an example has been described in which the secondary battery 10 is placed in the pack case 11 without bending the laminate case 9 at a boundary between the weld portion 9b and the non-weld portion 9c. However, the invention is not limited to this example.

For example, as shown in FIG. 10, the secondary battery 10 may be placed in a pack case 11x with the laminate case 9 bent at a boundary between the weld portion 9b and the non-weld portion 9c. In this case, dimension W11x of the pack case 11x in the width direction (see FIG. 10) can be reduced as compared with dimension W11 of the pack case 11 in the width direction (see FIG. 8). This can downsize the battery pack 13x.

A relationship between the tensile extension of the positive electrode and the short circuit which occurs in the battery crushed under pressure is shown in Table 1. Table 1 shows the tensile extension of the positive electrode and the result of a crush test (i.e., a depth at which the short circuit occurred) of each of Batteries 1-5.

In Batteries 1-4, the positive electrode current collector primarily contained aluminum, and contained iron, and the positive electrode was thermally treated at the same temperature (280°C) for different periods of time (Battery 1: 10 seconds, Battery 2: 20 seconds, Battery 3: 120 seconds, Battery 4: 180 seconds) after the rolling. In Battery 5, the positive electrode current collector primarily contained aluminum, and contained iron, and the positive electrode was not thermally treated after the rolling.

[Table 1]

| | Current collector | Thermal treatment [°C/sec] | Tensile extension [%] | Depth at which short circuit occurred [mm] |
|---|---|---|---|---|
| Battery 1 | A8021 | 280/10 | 3.0 | 8 |
| Battery 2 | A8021 | 280/20 | 5.0 | 9 |
| Battery 3 | A8021 | 280/120 | 6.0 | 10 |
| Battery 4 | A8021 | 280/180 | 6.5 | 10 |
| Battery 5 | A8021 | Not performed | 1.5 | 5 |

As shown in Table 1, the positive electrode of Battery 5 which was not thermally treated after the rolling showed the tensile extension of 1.5%. The positive electrodes of Batteries 1-4 which were thermally treated after the rolling showed the increased tensile extension of 3.0% or higher (Battery 1: 3.0%, Battery 2: 5.0%, Battery 3: 6.0%, Battery 4: 6.5%).

Further, as shown in Table 1, Battery 5 which was not thermally treated after the rolling experienced the short circuit when the battery was pressed by 5 mm, while Batteries 1-4 which were thermally treated after the rolling experienced the short circuit when the battery was pressed by 8 mm or more (Battery 1: 8 mm, Battery 2: 9 mm, Battery 3:10 mm, Battery 4: 10 mm).

As apparent from Table 1, the thermal treatment performed after the rolling can increase the tensile extension of the positive electrode to 3.0% or higher, thereby preventing the short circuit from occurring in the battery crushed under pressure.

Batteries 1-5 were fabricated in the following manner.

(Battery 1)

(Fabrication of Positive Electrode)

$LiNi_{0.82}Co_{0.15}Al_{0.03}O_2$ having an average particle diameter of 10μm was prepared.

Then, 4.5 vol% of acetylene black as a conductive agent relative to 100.0 vol% of a positive electrode active material, a solution prepared by dissolving 4.7 vol% of polyvinylidene fluoride (PVDF) as a binder relative to 100.0 vol% of the positive electrode active material in a N-methyl pyrrolidone (NMP) solvent, and $LiNi_{0.82}Co_{0.15}Al_{0.03}O_2$ as the positive electrode active material were mixed to obtain positive electrode material mixture slurry. The positive electrode material mixture slurry was applied to each surface of 15 μm thick aluminum foil (A8021H-H18-15RK manufactured by Nippon Foil Mfg. Co., Ltd.) as a positive electrode current collector, and was dried. The positive electrode current collector carrying the dried positive electrode material mixture slurry on each surface thereof was rolled to obtain a 0.157 mm thick positive electrode plate. The positive electrode plate was thermally treated at 280°C for 10 seconds using hot air which experienced low humidity treatment at -30°C. Then, the positive electrode plate was cut to have a width of 57 mm, and a length of 564 mm, thereby forming a positive electrode of 0.157 mm in thickness, 57 mm in width, and 564 mm in length.

(Fabrication of Negative Electrode)

Flake-like artificial graphite was ground and classified to obtain flake-like artificial graphite having an average particle diameter of about 20 μm.

To 100 parts by weight of the flake-like artificial graphite as a negative electrode active material, 3 parts by weight of styrene butadiene rubber as a binder, and 100 parts by weight of an aqueous solution containing 1% by weight of carboxymethyl cellulose were mixed to obtain negative electrode material mixture slurry. The negative electrode material mixture slurry was applied to each surface of 8 μm thick copper foil as a negative electrode current collector, and was dried. Then, the negative electrode current collector carrying the dried negative electrode material mixture slurry on each surface thereof was rolled to obtain a 0.156 mm thick negative electrode plate. The negative electrode plate was thermally treated by hot air in nitrogen atmosphere at 190°C for 8 hours. The negative electrode plate was cut to have a width of 58.5 mm, and a length of 750 mm to form a negative electrode of 0.156 mm in thickness, 58.5 mm in width, and 750 mm in length. The negative electrode had a tensile extension of 5% (i.e., not lower than 3.0%).

(Preparation of Nonaqueous Electrolyte)

To a solvent mixture prepared by mixing ethylene carbonate and dimethyl carbonate in the volume ratio of 1: 3 as a nonaqueous solvent, 5% by weight of vinylene carbonate as an additive for improving charge/discharge efficiency of the battery was added, and $LiPF_6$ as an electrolyte was dissolved in the solvent mixture at a molar concentration of 1.4 mol/m$^3$ relative to the nonaqueous solvent to prepare a nonaqueous electrolyte.

(Fabrication of Cylindrical Battery)

An aluminum positive electrode lead was attached to the positive electrode current collector, and a nickel negative electrode lead was attached to the negative electrode current collector. Then, the positive electrode and the negative electrode were wound with a polyethylene separator (a separator having a tensile extension of 8% (i.e., not lower than 3.0%)) interposed therebetween to constitute an electrode group. An upper insulator was attached to an upper end of the electrode group, and a lower insulator was attached to a lower end of the negative electrode group. Then, the negative electrode lead was welded to the battery case, the positive electrode lead was welded to a sealing plate having an internal pressure operated safety valve, and the electrode group was placed in the battery case. Then, the nonaqueous electrolyte was injected into the battery case under vacuum. An opening of the battery case was sealed with the sealing plate with a gasket interposed therebetween. Thus, the battery was fabricated.

This battery including the positive electrode which was thermally treated at 280°C (a temperature higher than a softening temperature of the positive electrode current collector) for 10 seconds was referred to as Battery 1.

(Battery 2)

Battery 2 was fabricated in the same manner as Battery 1 except that the positive electrode plate was thermally treated at 280°C for 20 seconds in the fabrication of the positive electrode.

(Battery 3)

Battery 3 was fabricated in the same manner as Battery 1 except that the positive electrode plate was thermally treated at 280°C for 120 seconds in the fabrication of the positive electrode.

(Battery 4)

Battery 4 was fabricated in the same manner as Battery 1 except that the positive electrode plate was thermally treated at 280°C for 180 seconds in the fabrication of the positive electrode.

(Battery 5)

Battery 5 was fabricated in the same manner as Battery 1 except that the positive electrode plate was not thermally treated after the rolling in the fabrication of the positive electrode.

The tensile extension of the positive electrode was measured in the following manner.

<Measurement of Tensile extension of Positive Electrode>

Each of Batteries 1-5 was charged at a constant current of 1.45 A to a voltage of 4.25 V, and was charged at a constant voltage to a current of 50 mA. Then, each of Batteries 1-5 was disassembled to remove the positive electrode. The removed positive electrode was cut to have a width of 15 mm and a length of 20 mm to form a test positive electrode. With an end of the test positive electrode fixed, the other end of the test positive electrode was stretched in the longitudinal direction at a speed of 20 mm/min. The length of the test positive electrode immediately before tearing was measured, and the tensile extension of the positive electrode was obtained from the measured length and the length of the test positive electrode before stretching (i.e., 20 mm).

The decrease in battery height when the short circuit occurred in the crush test was measured in the following manner.

<Crush Test>

Each of Batteries 1-5 was charged at a constant current of 1.45 A to a voltage of 4.25 V, and was charged at a constant voltage to a current of 50 mA. Then, a cylindrical rod having a diameter of 6 mm was brought into contact with the battery at a battery temperature of 30°C, and the cylindrical rod was moved in a depth direction of the battery at a speed of 0.1 mm/sec to crush the battery under pressure. Then, in each of Batteries 1-5 crushed under pressure, a deformation amount of the battery in the depth direction when the short circuit occurred (i.e., the depth at which the short circuit occurred) was obtained.

INDUSTRIAL APPLICABILITY

The present invention allows prevention of bucking in an electrode group of a secondary battery sealed in a laminate case. Therefore, the invention is useful for a secondary battery, a battery pack including the secondary battery, and a method for fabricating the secondary battery.

DESCRIPTION OF REFERENCE CHARACTERS

| | |
|---|---|
| 1 | Electrode group |
| 2 | Positive electrode |
| 2A | Positive electrode current collector |
| 2B | Positive electrode material mixture layer |
| 2a | Positive electrode lead |
| 3 | Negative electrode |
| 3A | Negative electrode current collector |
| 3B | Negative electrode material mixture layer |
| 3a | Negative electrode lead |
| 4 | Separator |
| 5 | Tab film |
| 6 | Tab film |
| 7 | Laminate film |
| 7a | Raised portion |
| 7x | Thin resin film |
| 7y | Thin metal film |
| 7z | Thin resin film |
| 8 | Laminate film |
| 8a | Recessed portion |
| 8x | Thin resin film |
| 8y | Thin metal film |
| 8z | Thin resin film |
| 9 | Laminate case |
| 9a | Container portion |
| 9b | Weld portion |
| 09c | Non-weld portion |
| 10 | Secondary battery |

| 11, 11x | Pack case |
| 11A | Case part |
| 11a, 11ax | Pressing portion |
| 11B | Case part |
| 11b, 11bx | Pressing portion |
| 12, 12x | Space |
| 13, 13x | Battery pack |
| H | Heater |

## Claims

1. A flat secondary battery comprising:

   an electrode group which is sealed in a laminate case made of laminate films, and includes a positive electrode including a positive electrode current collector carrying thereon a positive electrode material mixture layer containing a positive electrode active material and a binder, a negative electrode, and a porous insulating layer, wherein
   the laminate case includes a container portion for containing the electrode group, a weld portion in which the laminate films are welded to each other, and a non-weld portion which is provided between the container portion and the weld portion, and in which the laminate films are not welded to each other, and
   the positive electrode has a tensile extension of 3.0% or higher.

2. The secondary battery of claim 1, wherein
   the negative electrode has a tensile extension of 3.0% or higher, and
   the porous insulating layer has a tensile extension of 3.0% or higher.

3. The secondary battery of claim 1, wherein
   the positive electrode is prepared by rolling the positive electrode current collector to which positive electrode material mixture slurry containing the positive electrode active material has been applied and dried, and thermally treating the positive electrode current collector carrying the dried positive electrode material mixture slurry thereon at a predetermined temperature.

4. The secondary battery of claim 1, wherein
   the positive electrode current collector primarily contains aluminum, and contains iron.

5. The secondary battery of claim 4, wherein
   the content of iron in the positive electrode current collector is 1.20% by weight to 1.70% by weight, both inclusive.

6. A battery pack comprising:

   the secondary battery of claim 1; and
   a pack case containing the secondary battery, wherein
   the pack case includes a pressing portion which is provided between a surface of the laminate case facing a thickness direction and the pack case, and presses a center portion of the laminate case in the thickness direction, and
   space is provided between a surface of the pack case facing a width direction and the laminate case.

7. A method for fabricating a flat secondary battery including an electrode group which is sealed in a laminate case made of laminate films, and includes a positive electrode including a positive electrode current collector carrying thereon a positive electrode material mixture layer containing a positive electrode active material and a binder, a negative electrode, and a porous insulating layer, the method comprising:

   (a) preparing the positive electrode;
   (b) preparing the negative electrode;
   (c) forming the electrode group by winding or stacking the positive electrode and the negative electrode with the porous insulating layer interposed between after the preparation of the positive electrode (a) and the preparation of the negative electrode (b); and

13

(d) sealing the electrode group in the laminate case after the formation of the electrode group (c), wherein

the preparation of the positive electrode (a) includes:

(a1) applying positive electrode material mixture slurry containing the positive electrode active material onto the positive electrode current collector, and drying the positive electrode material mixture slurry;
(a2) rolling the positive electrode current collector carrying the dried positive electrode material mixture slurry thereon; and
(a3) increasing a tensile extension of the positive electrode to 3.0% or higher by thermally treating the positive electrode current collector carrying the dried positive electrode material mixture slurry thereon at a predetermined temperature after the rolling of the positive electrode current collector (a2), and

the sealing of the electrode group (d) includes:

(d1) stacking the laminate films in such a manner that the electrode group is contained in a container portion;
(d2) heating and welding peripheral portions of the stacked laminate films to form a weld portion, and forming a non-weld portion between the container portion and the weld portion.

8. The method for fabricating the secondary battery of claim 7, wherein
the predetermined temperature is higher than a softening temperature of the positive electrode current collector.

9. The method for fabricating the secondary battery of claim 7, wherein
the positive electrode current collector primarily contains aluminum, and contains iron.

# FIG. 1

THICKNESS DIRECTION
AXIAL DIRECTION
WIDTH DIRECTION

# FIG. 2

THICKNESS DIRECTION
WIDTH DIRECTION

FIG. 3

# FIG. 4

THICKNESS DIRECTION

AXIAL DIRECTION

WIDTH DIRECTION

# FIG. 5

THICKNESS DIRECTION

WIDTH DIRECTION

# FIG. 6

(a)

SIDE CLOSE TO
ELECTRODE GROUP

(b)

SIDE CLOSE TO
ELECTRODE GROUP

# FIG. 7

10

1

8a 7a

9b 9c 9a

9

THICKNESS DIRECTION

WIDTH DIRECTION

# FIG. 8

10

9

9b 9c 9a

1

11a

13

11

12

11b

W11

THICKNESS DIRECTION

WIDTH DIRECTION

# FIG. 9

# FIG. 10

FIG. 11

102b

103

101

102b 102a

102

THICKNESS DIRECTION

WIDTH DIRECTION

| | | |
|---|---|---|
| **INTERNATIONAL SEARCH REPORT** | | International application No. |
| | | PCT/JP2009/003367 |

**A. CLASSIFICATION OF SUBJECT MATTER**
H01M10/04(2006.01)i, H01M2/02(2006.01)i, H01M2/10(2006.01)i, H01M4/66
(2006.01)i, H01M10/40(2006.01)i

According to International Patent Classification (IPC) or to both national classification and IPC

**B. FIELDS SEARCHED**

Minimum documentation searched (classification system followed by classification symbols)
H01M10/04, H01M2/02, H01M2/10, H01M4/66, H01M10/40

Documentation searched other than minimum documentation to the extent that such documents are included in the fields searched
Jitsuyo Shinan Koho          1922–1996    Jitsuyo Shinan Toroku Koho    1996–2009
Kokai Jitsuyo Shinan Koho    1971–2009    Toroku Jitsuyo Shinan Koho    1994–2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-223086 A (Mitsubishi Chemical Corp.), 11 August 2000 (11.08.2000), paragraphs [0010] to [0050]; fig. 1 to 10 (Family: none) | 1-9 |
| A | JP 2002-117904 A (Mitsubishi Chemical Corp.), 19 April 2002 (19.04.2002), claims (Family: none) | 1-9 |
| A | JP 2008-186704 A (Matsushita Electric Industrial Co., Ltd.), 14 August 2008 (14.08.2008), claims; paragraphs [0041] to [0072] (Family: none) | 1-9 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 October, 2009 (14.10.09) | 27 October, 2009 (27.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/003367

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2008-130414 A  (Matsushita Electric Industrial Co., Ltd.), 05 June 2008 (05.06.2008), paragraphs [0014] to [0054]; fig. 1 to 9 (Family: none) | 1-9 |
| A | JP 2006-134762 A  (Sony Corp.), 25 May 2006 (25.05.2006), paragraphs [0013] to [0080]; fig. 1 to 3 (Family: none) | 1-9 |
| A | JP 2006-134761 A  (Sony Corp.), 25 May 2006 (25.05.2006), paragraphs [0013] to [0078]; fig. 1 to 3 (Family: none) | 2 |
| A | JP 9-129241 A  (Matsushita Electric Industrial Co., Ltd.), 16 May 1997 (16.05.1997), paragraphs [0012] to [0046]; fig. 1 (Family: none) | 1-9 |
| A | JP 2008-59941 A  (Nissan Motor Co., Ltd.), 13 March 2008 (13.03.2008), paragraphs [0009] to [0032]; fig. 1 to 6 & US 2008/0057392 A1    & EP 1921691 A1 | 6 |
| P,A | WO 2009/019861 A1  (Panasonic Corp.), 12 February 2009 (12.02.2009), claims & JP 2009-64770 A | 1-9 |

Form PCT/ISA/210 (continuation of second sheet) (April 2007)

**EP 2 395 587 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004234899 A
- JP 2007323217 A
- JP 2008002114 W